# FASCICULE DE BREVET EUROPEEN

(11) **EP 2 727 213 B1**
(45) Date de publication et mention de la délivrance du brevet: **11.10.2017**
(21) Numéro de dépôt: 12744039.4
(22) Date de dépôt: 02.07.2012
(51) Int. Cl.: H02J 7/00, B60L 11/18, H01R 13/703, H01R 13/66

(54) **BORNE DE CHARGE POUR VEHICULE ELECTRIQUE, STATION ET SYSTEME METTANT EN OEUVRE UNE TELLE BORNE**
LADETERMINAL FÜR EIN ELEKTRISCHES FAHRZEUG SOWIE STATION UND SYSTEM MIT EINEM SOLCHEN TERMINAL
CHARGING TERMINAL FOR AN ELECTRICAL VEHICLE, STATION AND SYSTEM USING SUCH A TERMINAL

(30) Priorité: 30.06.2011 FR 1155912
(43) Date de publication de la demande: 07.05.2014
(73) Titulaire: Bluecarsharing, 92800 Puteaux (FR)
(72) Inventeur: HALNAIS, Pierre, F-77580 Bouleurs (FR); BAIXAS, Stéphane, F-75013 Paris (FR); RODRIGUES, Ruben, F-95160 Montmorency (FR)
(74) Mandataire: Pontet Allano & Associes
(86) Numéro de dépôt international: PCT/FR2012/051530
(87) Numéro de publication internationale: WO 2013/001258

(56) Documents cités:
- WO-A1-02/063648
- WO-A1-2010/011545
- WO-A2-2007/141543
- US-A1- 2011 106 329
- US-B1- 7 745 954
- "IEC 61851-1:2010 - Electric vehicle conductive charging system - Part 1: General requirements", INTERNATIONAL STANDARD - IEC NORME INTERNATIONALE - CEI, X, XX, vol. ed2.0, no. IEC 61851-1:2010, 25 novembre 2010 (2010-11-25), pages 1-104, XP008147718,

## Description

La présente invention concerne une borne de charge pour véhicule électrique. Elle concerne également une station de charge de véhicules électriques et un système de gestion d'un parc de véhicules électriques mettant en oeuvre une telle borne.

Le domaine de l'invention est le domaine de la recharge des batteries d'un véhicule électrique au moyen d'une borne de charge et plus particulièrement le domaine de la recharge de véhicules proposés à la location.

### Etat de la technique

On connait actuellement des véhicules fonctionnant avec une ou plusieurs batteries électriques et des bornes, dites de charge, permettant de recharger les batteries des véhicules lorsque le véhicule est en stationnement.

On connait notamment la borne de charge décrit dans le brevet FR 2 766 950. Ce brevet divulgue une borne comprenant un coffret fermé par un couvercle verrouillable et dans lequel est agencée une prise électrique sous la forme d'un connecteur femelle pour la charge de la batterie d'un véhicule. Pour éviter tout problème d'électrocution de l'utilisateur, la borne comprend une sécurité. En effet, il n'est pas possible d'envoyer du courant dans la prise électrique tant que le couvercle n'est pas fermé.

Cependant, la borne de charge décrite dans ce document ne convient pas à toutes les situations de charge et ne procure pas une sécurité de l'utilisateur lorsque par exemple, la connexion électrique avec le véhicule ne s'effectue pas au niveau de la prise dans le coffret mais au niveau du véhicule, par exemple à l'aide d'un câble muni d'une fiche mâle ou femelle que l'utilisateur doit retirer du coffret et amener jusqu'au véhicule pour le connecter au véhicule. En effet, dans ce cas, le courant électrique est susceptible d'être disponible avant même la connexion de la borne avec le véhicule, pendant toute la durée de la manipulation du câble de connexion par l'utilisateur.

On connait également les documents WO 2007/141543 A2, US 2011/0106329 A1 et WO 2010/011545 A1 qui décrivent, seul ou en combinaison, une borne de charge selon le préambule de la revendication 1.

Un but de l'invention est de proposer une borne de charge plus sécurisée que les bornes de charge de l'état de la technique.

Un autre but de l'invention est de proposer une borne de charge permettant d'assurer une meilleure sécurité pour l'utilisateur quel que soit le type de connexion avec le véhicule.

### Exposé de l'invention

L'invention propose d'atteindre au moins l'un des buts précités par une borne de charge pour véhicule électrique, selon la revendication 1. Avec la borne selon l'invention, aucun courant électrique n'est communiqué au connecteur de borne tant que le connecteur de borne n'est pas connecté au connecteur de véhicule. Ainsi, l'utilisateur peut manipuler le connecteur de borne sans aucun danger d'électrocution.

La borne de charge selon l'invention permet d'assurer une meilleure protection que les bornes de chargement de l'état de la technique.

Par ailleurs, la borne de charge assure une protection qui est indépendante de la configuration de la borne de charge et plus particulièrement de la configuration de connexion de la borne de charge avec le véhicule. Ainsi, la borne de charge selon l'invention procure une protection complète de l'utilisateur quel que soit le type de connexion de la borne de charge avec le véhicule.

Avantageusement, le moyen de détection peut comprendre un fil électrique, dit pilote, prévu pour transporter un signal depuis le véhicule vers ladite borne.

Le signal transporté peut être un signal électrique de faible amplitude relatif à l'état de charge de la ou des batteries du véhicule.

Le signal transporté peut également être un signal fourni par un capteur, agencé au niveau du véhicule, et détectant la connexion du connecteur de borne et du connecteur de véhicule.

Selon un mode de réalisation avantageux, le moyen de détection peut comprendre au moins un capteur de position ou au moins un capteur de force ou un capteur de présence indiquant l'introduction du connecteur de borne dans le connecteur de véhicule *vice versa.*

Le capteur peut être intégré dans la borne ou dans le connecteur de borne.

Avantageusement, le moyen de détection peut en outre comprendre au moins un moyen de verrouillage du connecteur de borne avec le connecteur de véhicule, ledit moyen de verrouillage indiquant sa position verrouillée au moyen de commande.

Le moyen de verrouillage peut être intégré dans la borne ou dans le connecteur de borne.

Dans un mode de réalisation particulier, le moyen de contrôle peut comprendre un interrupteur agencé pour être commandé par le moyen de commande électriquement et/ou mécaniquement.

L'interrupteur peut avantageusement être positionné entre une source d'électricité et le moyen connecteur de borne.

Le moyen de commande peut comprendre une carte électronique apte à recevoir et analyser les données reçues depuis le moyen de détection.

La borne selon l'invention peut en outre comprendre un compartiment dans lequel est agencé le connecteur de borne.

La borne selon l'invention comprend en outre un couvercle agencé pour autoriser l'accès audit compartiment dans une position ouverte et interdire l'accès audit compartiment dans une position fermée.

La borne de charge selon l'invention peut en outre comprendre des moyens de verrouillage du couvercle. Ainsi, le connecteur de borne n'est accessible qu'avec une autorisation d'accès. Il est ainsi possible d'éviter des actes de vandalisme.

La borne peut en outre comprendre des moyens de signalisation de la mauvaise fermeture du couvercle, tels que des moyens lumineux et/ou sonore sur la borne.

Le couvercle peut être configuré pour retomber en position fermée quelle que soit la position de départ autorisée. Sa masse est notamment répartie pour obtenir ce résultat. Il comprend en particulier un bord tombé.

Les moyens de verrouillage peuvent être commandables électriquement. De ce fait, ils peuvent même être commandés à distance, par exemple au travers d'un réseau de communication, par exemple de type GPRS.

Les moyens de verrouillage peuvent comprendre des moyens de verrouillage magnétiques.

La borne selon l'invention comprend des moyens de verrouillage en position ouverte du couvercle pour éviter que l'utilisateur ait besoin de le tenir pendant qu'il manipule les connecteurs.

La borne peut également comprendre des moyens de commande des moyens de verrouillage en position ouverte pour désactiver ces moyens au bout d'une durée prédéterminée, par exemple 3 minutes, suite à leur activation, ou éventuellement suite à un autre évènement. Le couvercle retombe alors en position fermée et est verrouillé automatiquement.

Ces moyens de commande peuvent être confondus ou distincts des moyens de commande décrits plus haut (destiné à commander l'alimentation du connecteur en courant).

La borne de charge selon l'invention peut comprendre un connecteur de type femelle intégré à une de ses parois ou situé au bout d'un câble. De préférence, la borne de charge peut comprendre un connecteur mâle destiné à être connecté au connecteur complémentaire d'un véhicule, au niveau de ce dernier.

La borne de charge selon l'invention peut également comprendre plusieurs connecteurs de borne, par exemple un connecteur mâle et un connecteur femelle.

Dans ce cas, la borne de charge peut comprendre pour chaque connecteur de borne :
- au moins un moyen de contrôle, autorisant ou interdisant le passage d'un signal électrique vers ledit connecteur de borne, et
- au moins un moyen de détection de la connexion dudit connecteur de borne avec ledit connecteur de véhicule ;
de sorte que chaque connecteur de borne est contrôlé indépendamment les uns des autres.

Les moyens de contrôle et de détection de chaque connecteur sont de préférence distincts les uns des autres. Ils peuvent être de même type ou de type différent.

Dans un mode de réalisation particulièrement avantageuse, la borne de charge comprend à la fois un connecteur femelle et un câble comprenant deux connecteurs mâles à ses extrémités, une première extrémité étant destinée à s'engager dans le connecteur femelle de la borne et l'autre étant destinée à s'engager dans le connecteur femelle d'un véhicule.

Ce mode de réalisation permet de ne charger qu'un seul véhicule à la fois sur une borne quel que soit le type de connexion que nécessite ce véhicule, pour éviter de diminuer l'efficacité de la charge de chacun des véhicules.

La borne peut également comprendre un moyen d'identification d'un utilisateur autorisé, le déverrouillage des moyens de verrouillage en position fermée étant commandé par ce moyen d'identification.

Le moyen d'identification peut de préférence comprendre un lecteur RFID apte à lire une carte d'identification d'un utilisateur, abonné du service de location. Cela permet d'éviter que le couvercle ne soit déverrouillé par n'importe qui.

On notera toutefois que le moyen d'identification peut comprendre une serrure à clé, un clavier sur lequel l'utilisateur peut taper un identifiant, un moyen d'identification biométrique, etc.

Selon un autre aspect de l'invention il est proposé une station de charge pour véhicule électrique comprenant une pluralité de bornes de charge selon l'invention.

Selon encore un autre aspect de l'invention, il est proposé un système de gestion d'un parc de véhicules électriques comprenant :
- une pluralité de stations de charge selon l'invention, et
- une unité de gestion centrale, dit site central, connectée à chacune desdites stations de charge au travers d'un réseau de communication.

L'invention s'applique particulièrement à la gestion d'un parc de véhicules électriques interchangeables destinés à la location et pour lesquels une pluralité de stations d'accueil est prévue.

Le système de gestion peut également comprendre une pluralité de véhicules, notamment électriques.

D'autres avantages et caractéristiques apparaîtront à l'examen de la description détaillée de modes de réalisation nullement limitatifs, et des dessins annexés sur lesquels :
- la figure 1 est une représentation schématique d'un système de gestion globale d'un parc de véhicule électrique proposé à la location ;
- la figure 2 est une représentation schématique d'une borne de charge selon l'invention ;
- la figure 3 est une représentation schématique de l'intérieur d'une borne de charge selon l'invention ;
- la figure 4 est une représentation schématique d'un exemple non limitatif du principe de fonctionnement d'une borne de charge selon l'invention ; et
- la figure 5 est une représentation schématique d'un procédé de fonctionnement d'une borne de charge selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si c'est cette partie uniquement est suffisante pour conférer un avantage technique ou pour différencier l'invention par rapport à l'état de la technique antérieur.

En particulier toutes les variantes et modes de réalisation décrits sont combinables entre eux si rien ne s'oppose à cette combinaison sur le plan technique.

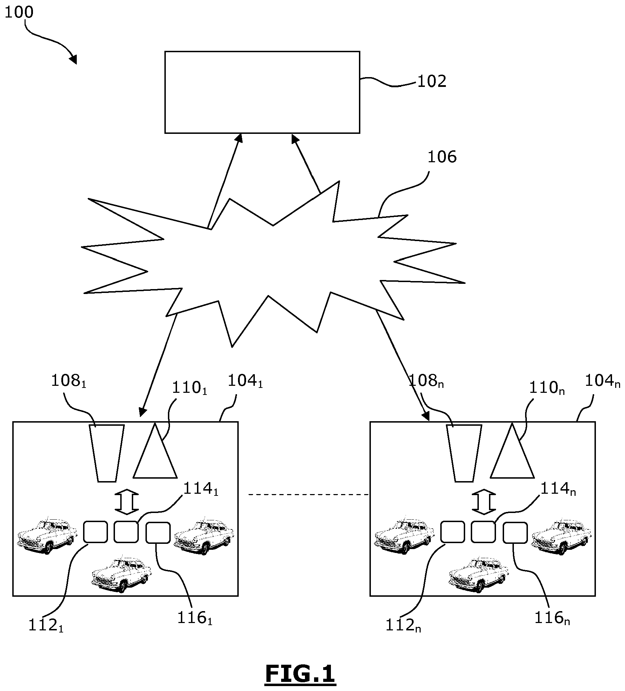

La figure 1 est une représentation schématique d'un système de gestion globale d'un parc de véhicule électrique proposé à la location.

Le système 100 représenté sur la figure 1 comprend un site central 102 (également appelé organe central dans la suite de la description) connecté à plusieurs sites - ou stations - 104₁-104ₙ, dits de location au travers d'un réseau de communication 106 sans fil, par exemple GPRS, ou d'un réseau filaire, par exemple de type DSL. De préférence, chaque station est reliée au site central par l'intermédiaire des deux réseaux distincts, ce qui permet une connexion en continu même si l'un des réseau est défaillant.

Chaque station de location comprend une borne d'abonnement 108 pour l'enregistrement d'un nouvel abonné, une borne de location 110 pour la location d'un véhicule et plusieurs bornes de charge 112-116, chaque borne de charge étant prévue pour charger un véhicule muni d'une batterie électrique à un emplacement de stationnement.

Le site central 102 peut être connecté directement à chacune des bornes d'une station de location 104 au travers du réseau 106 ou seulement à la borne d'abonnement et/ou à la borne de location et/ou aux bornes de charge 112-116.

Au moins deux bornes d'une station de location sont connectées entre elles au travers d'une connexion filaire (non représentée).

Le site central 102 est également agencé pour se connecter à un véhicule électrique comprenant un boitier de connexion avec un ou plusieurs éléments du véhicule et/ou une interface de communication avec l'utilisateur, par l'intermédiaire d'un réseau GPRS. Chaque véhicule est de ce fait équipé d'une puce GSM.

Le site central 102 est également agencé pour échanger des informations avec un appareil de communication portable tel qu'un PDA, un téléphone portable, etc., porté par un opérateur du service de location et également relié au site central par l'intermédiaire d'un réseau GPRS.

Le système permet de gérer une pluralité de véhicules comprenant chacun une unité de commande apte à communiquer avec l'organe central et avec différents organes du véhicule, et une interface utilisateur.

Les utilisateurs sont aptes à interagir avec les différentes bornes ainsi qu'avec les différents éléments des véhicules. En outre, le service de location de véhicule avec le système selon l'invention peut être également effectué à l'aide des opérateurs et de leur terminal mobile tel qu'un PDA, qui peuvent intervenir dans le service.

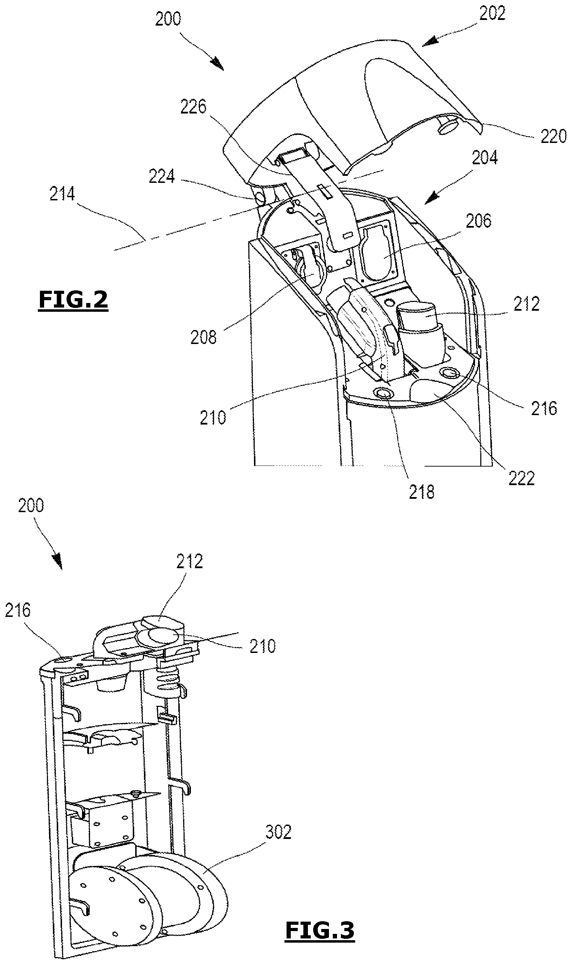

Les figures 2 et 3 sont des représentations schématiques d'une borne de chargement selon l'invention.

La borne de chargement 200 comprend un capot ou un couvercle 202 mobile couvrant une zone/un compartiment 204 d'interface abonnés principalement située sous le couvercle mobile 202.

Cette zone 204 comporte une embase 206 de connecteur de borne de type 3 qui permet d'alimenter les véhicules particuliers.

La zone 204 comprend en outre un connecteur 208 de type E/F pour les deux roues électriques.

La zone 204 comprend également un câble comprenant :
- à l'une de ses extrémités un connecteur 210 de type 3 prévu pour se connecter au connecteur de borne 206, et
- à l'autre de ses extrémités un connecteur 212 prévu pour se connecter à un connecteur de véhicule.

Le câble (non représenté) portant ces deux connecteurs 210 et 212 est prévu pour être enroulé autour d'un enrouleur 302 (voir figure 3) intégré dans la borne 200.

La borne 200 pourrait également comprendre uniquement un câble ou un connecteur de type femelle.

Deux composantes fonctionnelles sont également présentes dans cette zone 204 au-dessus du couvercle 202 :
- des moyens d'identification, tels que par exemple une cible et lecteur RFID (non représentés), pour permettre à un abonné d'accéder aux éléments sous le couvercle mobile 202, et
- un système d'éclairage d'état, par exemple à base de leds (vert, rouge, et bleu) dont l'état est visible sur le dessus du couvercle mobile 202 indiquant à l'abonné le statut de la place du véhicule et du véhicule.

Le couvercle 202 est articulé, en particulier en rotation, par exemple autour d'un axe horizontal 214.

Le couvercle 202 retombe de son propre poids sur le reste de la borne 200 et est verrouillé par au moins un moyen de verrouillage, tel que par exemple des ventouses magnétiques 216 et 218 qui écrasent un moyen d'étanchéité, tel qu'un joint d'étanchéité 220 permettant de rendre étanche le compartiment 204 comprenant les câbles.

Au moins un moyen capteur détecte la position du capot 202, par exemple un capteur 222 détectant sa retombée.

Une articulation 224 située à l'arrière de la coiffe permet une large ouverture pour accès aisé aux prises et aux fiches de charge.

Une ventouse 226 ou un moyen équivalent maintient la coiffe en position ouverte pendant un temps contrôlé pour permettre les manipulations de l'abonné.

La fonction de lecture RFID est intégrée dans cette coiffe sous la forme d'un coupleur avec antenne intégrée.

La fermeture du couvercle 202 assure l'écrasement du joint 220.

Les voyants d'état (rouge, vert, bleu) sont intégrés à la collerette du couvercle. Une fenêtre (non représentée) au niveau de la coiffe permet l'éclairement d'état de la borne 200.

Ainsi, lorsque l'utilisateur passe une carte RFID sur le lecteur, soit pour rendre le véhicule et le connecter au câble de la borne 200, soit pour prendre le véhicule et ranger le câble dans le compartiment 204, les ventouses magnétiques sont désactivées. L'utilisateur relève le couvercle 202 et effectue les actions nécessaires (rangement de la prise ou connexion du véhicule) selon le cas de figure. Puis, il rabaisse le couvercle 202 (s'il ne le fait pas, le couvercle 202 se rabaisse seul par son propre poids). Les ventouses magnétiques 216 et 218 effectuent leur action de verrouillage sans intervention extérieure s'il y a contact entre le couvercle 202 et le reste de la borne 200. Le couvercle 202 pourrait ne pas bien se verrouiller en cas d'obstacle empêchant volontairement ou involontairement la fermeture du couvercle 202.

La borne 200 comprend donc un moyen capteur 222 pour détecter la fermeture du couvercle, tel que par exemple un capteur de force pour détecter le poids du couvercle ou capteur optique, et un moyen capteur pour détecter le rangement du câble, tel que par exemple un capteur de force mesurant la tension du câble d'enroulement ou de position, le rangement du câble enclenchant un cliquet par exemple. Il comprend également un moyen capteur, tel qu'un fil pilote 3 (non représenté), détectant si le câble est bien branché dans le connecteur de type 3 et le véhicule.

Dans un mode de réalisation préféré, lorsque l'utilisateur déverrouille le couvercle 202, la borne de chargement 200 en informe le site central et lui envoie l'identifiant de l'utilisateur. Le site central mémorise alors l'horaire de début ou de fin de location.

Puis, au bout d'un temps prédéterminé après le déverrouillage du couvercle 202 par l'utilisateur, le site central interroge la borne de chargement ou la borne de location sur l'état des capteurs de la borne de chargement 200. Le site central est apte à communiquer avec la borne de location ou la borne de chargement par l'intermédiaire d'un réseau sans fil, tel qu'un réseau GPRS ou par un réseau filaire de type DSL. La borne de location est apte à communiquer avec la borne de charge par l'intermédiaire d'un réseau filaire.

Le message envoyé comprend notamment un identifiant de la borne de charge.

La borne de location ou la borne de charge transmet au site central les valeurs associées aux paramètres mesurées par les différents capteurs, chaque valeur pouvant être une valeur numérique ou binaire. Le site central les compare à des valeurs normales pour ces paramètres.

On notera que les valeurs peuvent être comparées directement par la borne de charge ou la borne de location, auquel cas on détermine au niveau de l'une de ces bornes si tout est en ordre pour la borne de charge.

Si une des valeurs des capteurs n'est pas conforme à la valeur attendue, par exemple couvercle non verrouillé, ou câble mal rangé lors de la prise du véhicule ou pas de connexion du câble lors de la remise du véhicule, le site central en avertit l'utilisateur.

Nous allons maintenant décrire le principe de fonctionnement d'une borne selon l'invention.

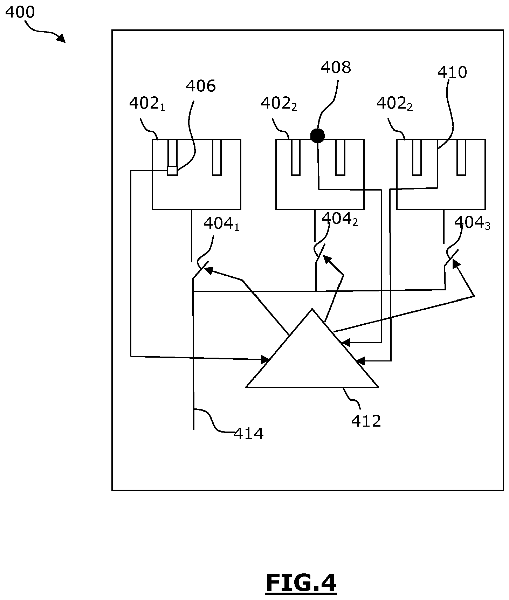

La borne de charge comprend un moyen de contrôle, par exemple un interrupteur, permettant d'interdire ou d'autoriser le passage d'un signal électrique, en particulier du signal électrique de charge, vers un connecteur de borne. Lorsque la borne comprend plusieurs connecteurs de borne, un moyen de contrôle est associé à chaque connecteur de borne. Dans l'exemple représenté sur la figure 4, la borne comprend trois connecteurs de borne 402₁, 402₂ et 402₃. Un moyen de contrôle, c'est-à-dire un interrupteur, à savoir les interrupteurs 404₁, 404₂ et 404₃, est associé à chacun des connecteurs de bornes 402.

Un moyen de détection est également associé à chaque connecteur de borne. Ainsi, le connecteur de borne 402₁ comprend un capteur de force 406 disposé dans le connecteur de borne 402₁, le connecteur de borne 402₂ comprend un capteur de présence 408 par contact disposé sur le connecteur de borne 402₂ et le connecteur de borne 402₃ comprend un fil pilote 410 agencé pour transporter un signal provenant du véhicule à charger.

Lorsque la borne comprend un câble destiné à être placé dans le connecteur 402 d'une part et d'autre part dans le connecteur de véhicule, ce câble comprend également un fil pilote.

Chacun des moyens de détection 406-410 est connecté à un module de commande 412 qui en fonction du signal fourni par chacun des moyens de détection commande les interrupteurs 404 indépendamment de sorte à fournir un courant électrique de charge aux connecteurs de borne 402 de manière indépendante depuis une ligne de courant 414 connectée par exemple au réseau de distribution électrique.

Le module de commande 412 peut en outre être agencé pour commander les moyens de verrouillage du couvercle de la borne en ouverture ou en fermeture en fonction d'informations reçues du site distant.

Le module de commande se présente sous la forme d'une carte électronique.

Le module de commande peut être muni de moyens de communication au travers du réseau.

On notera que la borne de charge selon l'invention n'est pas limitée à la borne décrite ci-dessus. Une borne peut comprendre un nombre de connecteurs différent de ce qui a été décrit ici. Chacun des connecteurs peut être muni d'un détecteur tel que n'importe lequel des connecteurs décrits ci-dessus.

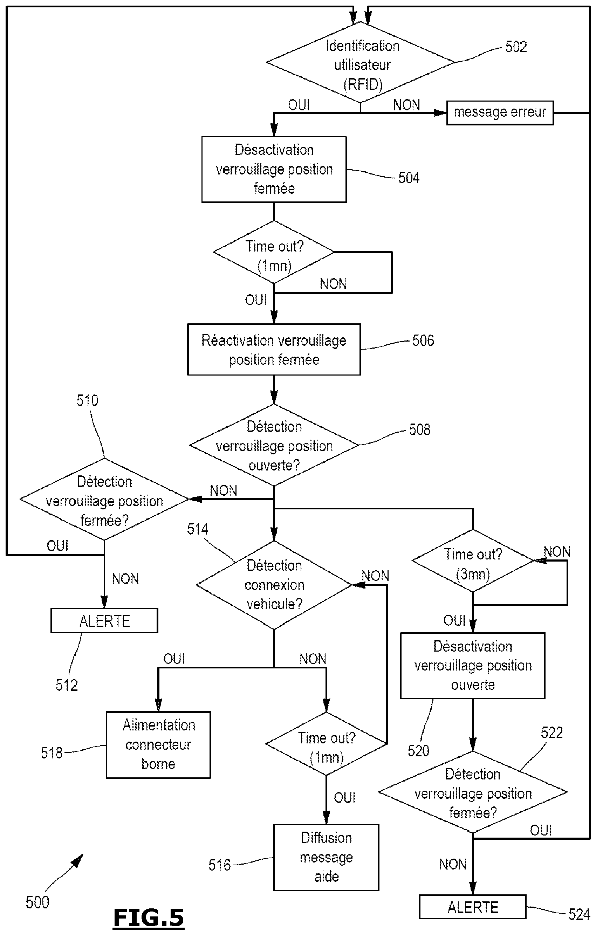

Nous allons maintenant décrire le procédé de fonctionnement d'une borne selon l'invention en référence à la figure 5.

Tout d'abord, l'utilisateur passe une carte d'identification sur la cible située sur le couvercle de la borne de charge. La borne de charge identifie alors l'utilisateur pendant une étape d'identification 502 et vérifie s'il s'agit d'un utilisateur valide. Pour cela, elle communique avec l'organe central distant du système, par exemple au travers du réseau, qui tient à jour la base de données des abonnés du service

S'il s'avère que l'utilisateur n'est pas un utilisateur valide, la borne émet un message d'erreur et se prépare à recevoir une autre identification.

Si l'utilisateur est un utilisateur valide, lors d'une étape 504, la borne de charge désactive, temporairement, par exemple pour environ 1 minute, les ventouses formant moyens de verrouillage du couvercle en position fermée. Cette désactivation est effectuée en coupant l'alimentation des moyens de verrouillage magnétiques en position fermée (constitués par des électroaimants).

On notera que le circuit de commande de la borne dispose d'une horloge interne pour que cette coupure d'alimentation n'excède pas un temps prédéterminé.

L'utilisateur peut donc pendant ce moment ouvrir le couvercle et commencer à brancher le véhicule à la borne. La borne réactive, pendant une étape 506, les moyens de verrouillage une fois la durée prédéterminée écoulée et teste, une fois cette durée écoulée, si le couvercle est verrouillé en position ouverte lors d'une étape 508.

S'il n'est pas verrouillé en position ouverte, cela signifie a priori que l'utilisateur ne l'a pas ouvert. On vérifie donc si le couvercle est verrouillé en position fermée lors d'une étape 510. Si c'est le cas, on considère que l'utilisateur n'a pas souhaité brancher son véhicule à la borne et on prépare à nouveau la borne à recevoir l'identification d'un nouvel utilisateur. Si le couvercle n'est verrouillé ni en position ouverte ni en position fermée, on déclenche une alerte à destination de l'utilisateur lors d'une étape 512.

Une telle alerte peut être une signalisation lumineuse ou sonore sur la borne de charge, notamment sur son couvercle, ou un appel d'un opérateur distant si l'alerte persiste. Une telle alerte d'un opérateur distant peut être effectuée par le biais d'un message envoyé à l'organe central, lui-même apte à envoyer un SMS à un opérateur distant indiquant la nature du problème et sa localisation en fonction des informations contenues dans ses bases de données concernant les stations (pour la nature du message) et les opérateurs (pour la destination du message).

Si le couvercle est verrouillé en position ouverte, on déclenche l'horloge de sorte qu'elle compte un temps prédéterminé, par exemple 3 minutes, à partir du verrouillage du couvercle en position fermée. On détecte ensuite, à l'étape 514, si un véhicule est connecté à l'une des prises de la borne par l'intermédiaire des fils pilotes et/ou d'autres moyens de détection de la connexion d'un connecteur dans celui de la borne. Si rien n'a été détecté au bout d'une minute, on peut envisager de diffuser un message d'aide interactif à l'utilisateur lors d'une étape 516. Sinon, le connecteur de la borne auquel on détecte une connexion est alimenté, lors d'une étape 518, grâce aux informations du fil pilote ou du capteur remontées à la carte électronique. Evidemment, seul le connecteur pour lequel on détecte la connexion est alimenté, les autres connecteurs ne recevant aucun courant.

Lorsque la borne comporte plusieurs connecteurs, elle effectue plusieurs tests. Si un des connecteurs est considéré comme occupé, cela suffit pour que les moyens de détection considèrent qu'il y a détection.

Une fois la durée des 3 minutes passées, et ce quel que soit le statut des connecteurs de la borne, on désactive les moyens de verrouillage en position ouverte lors d'une étape 520. Le couvercle, alors entraîné par son poids, se referme et, les moyens de verrouillage en position fermée, activés, se verrouillent. On vérifie alors si le couvercle est effectivement verrouillé en position fermée lors d'une étape 522. Si c'est le cas, le procédé est terminé et la borne est prête à recevoir à nouveau l'identification d'un utilisateur. Sinon, on effectue une étape d'alerte 524 telle qu'expliquée plus haut par exemple.

On notera que le fil pilote peut permettre d'autres applications, par exemple, de couper l'alimentation d'un connecteur concerné lorsque la batterie est considérée comme chargée : dans ce cas, le fil pilote remonte vers la carte électronique des informations concernant la charge de la batterie. Le fil pilote peut toutefois remonter d'autres informations en complément ou en remplacement de celles décrites ci-dessus.

De même, les étapes d'alerte ou d'aide de l'utilisateur sont optionnelles. L'étape d'alerte peut également être effectuée de façon différente que ce qui a été présenté plus haut.

On peut aussi envisager des étapes supplémentaires dans ce procédé. Par exemple, on peut envisager d'envoyer des données au circuit de commande, lorsqu'un connecteur est connecté, pour éviter que les autres connecteurs ne délivrent du courant, même si un connecteur complémentaire est branché dans l'un de ceux-ci.

Bien entendu l'invention n'est pas limitée aux exemples qui viennent d'être décrits.

## Revendications

1. Borne (400) de charge pour véhicule électrique comprenant au moins un moyen de connexion électrique (402), dit connecteur de borne, prévu pour coopérer avec au moins un moyen de connexion électrique d'un véhicule, dit connecteur de véhicule, pour établir une liaison électrique afin de transporter un signal électrique de ladite borne (400) vers ledit véhicule, ladite borne de charge (400) comprenant en outre :
- au moins un moyen (404), dit de contrôle, autorisant ou interdisant le passage d'un signal électrique de charge vers ledit connecteur de borne (402),
- au moins un moyen (406-410) de détection de la connexion dudit connecteur de borne (402) avec ledit connecteur de véhicule,
- au moins un moyen (412) pour commander ledit moyen de contrôle (404) pour autoriser ou interdire le passage dudit signal électrique de charge en fonction d'au moins une donnée de détection fournie par le moyen de détection (406-410), et
- un compartiment dans lequel sont agencés ledit ou lesdits connecteurs de borne, le compartiment étant fermé par un couvercle (202) muni de moyens de verrouillage (210) ;
**caractérisé en ce que** lesdits moyens de verrouillage comprennent des moyens de verrouillage en position ouverte et des moyens de commande électrique de ces moyens de verrouillage, le couvercle et les moyens de verrouillage en position ouverte étant de préférence conformés et agencés de sorte que le couvercle reprenne sa position fermée sous l'effet de son propre poids lorsque les moyens de verrouillage en position ouverte sont désactivés par les moyens de commande.

2. Borne (400) selon la revendication 1, **caractérisée en ce que** le moyen de détection comprend un fil électrique (410), dit pilote, prévu pour transporter un signal depuis le véhicule vers ladite borne (400).

3. Borne (400) selon l'une quelconque des revendications précédentes, **caractérisée en ce que** le moyen de détection comprend au moins un capteur de position, de force (406) ou de présence (408) indiquant l'introduction du connecteur de borne dans le connecteur de véhicule ou du connecteur de véhicule dans le connecteur de borne.

4. Borne (400) selon l'une quelconque des revendications précédentes, **caractérisé en ce que** le moyen de détection comprend au moins un moyen de verrouillage du connecteur de borne avec le connecteur de véhicule, ledit moyen de verrouillage indiquant sa position verrouillée au moyen de commande.

5. Borne (400) selon l'une quelconque des revendications précédentes, **caractérisée en ce que** le moyen de contrôle comprend un interrupteur (404) agencé pour être commandé par le moyen de commande (412) électriquement et/ou mécaniquement.

6. Borne (400) selon l'une quelconque des revendications précédentes, **caractérisée en ce qu'**elle comprend plusieurs connecteurs de borne (402₁-402₃), ladite borne de charge (400) comprenant pour chacun desdits connecteurs :
- au moins un moyen de contrôle (404₁-404₃), autorisant ou interdisant le passage d'un signal électrique vers ledit connecteur de borne, et
- au moins un moyen de détection (406-410) de la connexion dudit connecteur de borne avec ledit connecteur de véhicule ;
de sorte que chaque connecteur de borne (402₁-402₃) est contrôlé indépendamment les uns des autres.

7. Station de charge (104) pour véhicule électrique comprenant une pluralité de bornes (112-116) de charge selon l'une quelconque des revendications précédentes.

8. Système (100) de gestion d'un parc de véhicules électriques comprenant une pluralité de stations de charge (104) selon la revendication 7, une unité de gestion centrale (102), dite site central, connectée à chacune desdites stations (104) de charge au travers d'un réseau de communication (106).

## Patentansprüche

1. Anschluss (400) zum Laden für ein elektrisches Fahrzeug, der mindestens ein elektrisches Verbindungsmittel (402), das Anschlussverbinder genannt wird, umfasst, das vorgesehen ist, mit mindestens einem elektrischen Verbindungsmittel eines Fahrzeugs, das Fahrzeugverbinder genannt wird, zusammenzuwirken, um eine elektrische Verbindung herzustellen, um ein elektrisches Signal von dem Anschluss (400) zu dem Fahrzeug zu transportieren, wobei der Anschluss (400) zum Laden ferner umfasst:
- mindestens ein Mittel (404), das Mittel zur Kontrolle genannt wird, das den Durchgang eines elektrischen Lastsignals zu dem Anschlussverbinder (402) ermöglicht oder verhindert,
- mindestens ein Mittel (406-410) zur Erfassung der Verbindung des Anschlussverbinders (402) mit dem Fahrzeugverbinder, und
- mindestens ein Mittel (412) zum Steuern des Mittels zur Kontrolle (404), um den Durchgang des elektrischen Ladesignals als Funktion von mindestens einer Erfassungsangabe zu ermöglichen oder zu verhindern, die von dem Mittel zur Erfassung (406-410) geliefert wird, und
- ein Abteil in dem der oder die Anschlussverbinder angeordnet sind, wobei das Abteil durch eine Abdeckung (202) verschlossen ist, die mit Mittel zur Verriegelung (210) versehen ist,
**dadurch gekennzeichnet, dass** die Mittel zur Verriegelung Mittel zur Verriegelung in der offenen Position und elektrische Steuermittel dieser Mittel zur Verriegelung aufweisen, wobei die Abdeckung und die Mittel zur Verriegelung in der offenen Position vorzugsweise angepasst sind und so angeordnet sind, dass die Abdeckung wieder in ihre geschlossene Position unter der Wirkung seines eigenen Gewichts zurückkehrt, wenn die Mittel zur Verriegelung in der offenen Position durch die Steuermittel deaktiviert sind.

2. Anschluss (400) nach Anspruch 1, **dadurch gekennzeichnet, dass** das Mittel zur Erfassung einen elektrischen Draht (410), der Pilot genannt wird, umfasst, der vorgesehen ist, um ein Signal von dem Fahrzeug zu dem Anschluss (400) zu transportieren.

3. Anschluss (400) nach einem der vorhergehenden Ansprüche, **dadurch gekennzeichnet, dass** das Mittel zur Erfassung mindestens einen Positions-, Kraft- (406) oder Anwesenheitssensor (408) umfasst, der das Einsetzen des Anschlussverbinders in den Fahrzeugverbinder oder des Fahrzeugverbinders in den Anschlussverbinder anzeigt.

4. Anschluss (400) nach einem der vorhergehenden Ansprüche, **dadurch gekennzeichnet, dass** das Mittel zur Erfassung mindestens ein Mittel zur Verriegelung des Anschlussverbinders mit dem Fahrzeugverbinder aufweist, wobei das Mittel zur Verriegelung seine verriegelte Position dem Steuermittel anzeigt.

5. Anschluss (400) nach einem der vorhergehenden Ansprüche, **dadurch gekennzeichnet, dass** das Mittel zur Kontrolle einen Schalter (404) umfasst, der eingerichtet ist, durch das Steuermittel (412) elektrisch und / oder mechanisch gesteuert werden.

6. Anschluss (400) nach einem der vorhergehenden Ansprüche, **dadurch gekennzeichnet, dass** er mehrere Anschlussverbinder (402₁- 402₃) umfasst, wobei der Anschluss zum Laden (400) für jeden der Anschlüsse umfasst:
- mindestens ein Kontrollmittel (404₁-404₃), das den Durchgang eines elektrischen Signal zu dem Anschlussverbinder ermöglicht oder verhindert, und
- mindestens ein Mittel zur Erfassung (406-410) der Verbindung des Anschlussverbinders mit dem Fahrzeugverbinder;
so dass jeder Anschlussverbinder (402₁-402₃) unabhängig voneinander gesteuert wird.

7. Ladestation (104) für ein elektrisches Fahrzeug, die mehrere Anschlüsse zum Laden (112-116) nach einem der vorhergehenden Ansprüche umfasst.

8. System (100) zur Verwaltung einer Flotte von elektrischen Fahrzeugen, das mehrere Ladestationen (104) nach Anspruch 7 umfasst, wobei eine zentrale Verwaltungseinheit (102), die Zentrale genannt wird, mit jeder der Ladestationen (104) über ein Kommunikationsnetzwerk (106) verbunden ist.

## Claims

1. A charging terminal (400) for an electric vehicle comprising at least one electrical connection means (402), called terminal connector, intended to cooperate with at least one electrical connection means of a vehicle, called vehicle connector, in order to establish an electrical connection so as to convey an electrical signal from said terminal (400) to said vehicle, said charging terminal (400) also comprising:
- at least one means (404), called control means, allowing or preventing the passage of an electrical charging signal to said terminal connector (402),
- at least one means (406-410) for detecting the connection of said terminal connector (402) with said vehicle connector,
- at least one means (412) for controlling said control means (404) in order to allow or prevent the passage of said electrical charging signal as a function of at least one item of detection data provided by the detection means (406-410), and
- a compartment in which said terminal charger or chargers are arranged, the compartment being closed by a lid (202) equipped with locking means (210);
**characterized in that** said locking means comprise means for locking in an open position and means for electrically controlling these locking means, the lid and the means for locking in an open position preferably being produced and arranged so that the lid returns to its closed position under the effect of its own weight when the means for locking in an open position are deactivated by the control means.

2. The terminal (400) according to claim 1, **characterized in that** the detection means comprise an electrical wire (410), called pilot wire, intended to convey a signal from the vehicle to said terminal (400).

3. The terminal (400) according to any one of the preceding claims, **characterized in that** the detection means comprise at least one position sensor, a force sensor (406) or a presence sensor (408) indicating the introduction of the terminal connector into the vehicle connector or of the vehicle connector into the terminal connector.

4. The terminal (400) according to any one of the preceding claims, **characterized in that** the detection means comprise at least one means for locking the terminal connector to the vehicle connector, said locking means indicating its locked position to the control means.

5. The terminal (400) according to any one of the preceding claims, **characterized in that** the control means comprise a switch (404) arranged in order to be electrically and/or mechanically controlled by the control means (412).

6. The terminal (400) according to any one of the preceding claims, **characterized in that** it comprises several terminal connectors (402₁-402₃), said charging terminal (400) comprising for each of said connectors:
- at least one control means (404₁-404₃) allowing or preventing the passage of an electrical signal to said terminal connector, and
- at least one means (406-410) for detecting the connection of said terminal connector with said vehicle connector;
so that each terminal connector (402₁-402₃) is controlled independently of one another.

7. A charging station (104) for an electric vehicle comprising a plurality of charging terminals (112-116) according to any one of the preceding claims.

8. A management system (100) for a fleet of electric vehicles comprising a plurality of charging stations (104) according to claim 7, a central management unit (102), called central site, connected to each of said charging stations (104) via a communication network (106).
